(19) Europäisches Patentamt
European Patent Office
Office européen des brevets

(11) **EP 4 465 141 A1**

(12) **EUROPEAN PATENT APPLICATION**

(43) Date of publication:
**20.11.2024 Bulletin 2024/47**

(21) Application number: **23173942.6**

(22) Date of filing: **17.05.2023**

(51) International Patent Classification (IPC):
**G05D 1/02** (2020.01)        **G08G 1/00** (2006.01)
**G08G 1/0968** (2006.01)

(52) Cooperative Patent Classification (CPC):
**G08G 1/096811; G05D 1/693; G08G 1/20;**
G05D 2105/28; G05D 2109/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Volvo Autonomous Solutions AB
405 08 Göteborg (SE)**

(72) Inventors:
• **HELLGREN, Jonas
412 58 Göteborg (SE)**

• **ROGENFELT, Åsa
414 78 Gothenburg (SE)**
• **OHLIN, Alexander
412 79 Göteborg (SE)**
• **MÖLLER, David
442 31 Kungälv (SE)**

(74) Representative: **Zacco Sweden AB
P.O. Box 5581
Löjtnantsgatan 21
114 85 Stockholm (SE)**

(54) **TRAFFIC DEADLOCK DATA SET REPRESENTATION FOR COMPUTATIONALLY EFFICIENT DEADLOCK CLASSIFICATION**

(57)     The disclosure relates to a computer-implemented method of generating a traffic deadlock dataset and a computer-implemented method of detecting a traffic deadlock for a plurality of vehicles travelling along their planned vehicle trajectories in a site, wherein each of the planned trajectories include a traffic-constrained area subject to a vehicle occupancy constraint. The disclosure also relates to a computer-implemented traffic planner for planning a plurality of guided vehicle trajectories within a site where a traffic situation has at least one traffic-constrained location, the traffic planner comprising:
- a deadlock classification model configured to classify a traffic situation for vehicle traffic following guided vehicle trajectories within the site, wherein the deadlock classification model comprises a deadlock classification for a current traffic scenario, wherein the deadlock classification is generated by the computer-implemented method of detecting a traffic deadlock.

Fig. 1

**Description**

**TECHNICAL FIELD**

The disclosure relates generally to design of sites where vehicles move in planned trajectories. In particular aspects, the disclosure relates to a traffic deadlock data set representation for computationally efficient deadlock classification. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

A traffic deadlock occurs when multiple vehicles want to access the same location on their vehicle trajectories at the same time. It is particularly a problem when planning trajectories for a plurality of heavy-duty vehicles as these vehicles can be more constrained than other types of vehicles in terms of how they move along a trajectory. When planning trajectories for a plurality of vehicles forming a vehicle fleet operating within a particular area or site, it is accordingly important to try to minimise the risk of deadlocks occurring as each vehicle will follow its planned trajectory even if this crosses a planned trajectory of another vehicle or passes through a traffic constrained location where one or more other planned vehicle trajectories may pass.

Planning trajectories for autonomous or semi-autonomous heavy-duty vehicles operating in the same area can be particularly challenging as such vehicles may have a range of roles and operational tasks that use a motion support devices (MSDs) for their operation. MDSs may take the form of wide range of different physical devices, such as combustion engines, electric machines, friction brakes, regenerative brakes, shock absorbers, air bellows, and power steering pumps which may be individually controllable, for instance such that friction brakes may be applied at one wheel, i.e., a negative torque, while another wheel on the vehicle, perhaps even on the same wheel axle, is simultaneously used to generate a positive torque by means of an electric machine.

The operation of a heavy-duty vehicle is accordingly more complex than the operation of a more lightweight vehicle such as a car and extricating a plurality of heavy-duty vehicles from a deadlock situation may not be very straightforward, especially if the heavy-duty vehicle is operating autonomously. Even if a heavy-duty vehicle is semi-autonomously operated or manually driven or operated either from within the vehicle or remotely in some embodiments, if it encounters a deadlock along a guided trajectory it may require special skills and equipment as well as possibly reprogramming to be removed from the deadlock.

Reducing the likelihood of encountering a traffic deadlock is accordingly desirable when planning guided trajectories for a fleet of vehicles operating within the same area or site.

The disclosed technology seeks to mitigate, obviate, alleviate, or eliminate various issues known in the art that affect the ability of a vehicle to follow a guided trajectory in an area where traffic situations may include at least one area where vehicle occupancy is limited more than it is elsewhere along the vehicle trajectories.

**SUMMARY**

According to a first aspect of the disclosure, A computer-implemented method of generating a traffic deadlock dataset for a plurality of vehicles travelling along their planned vehicle trajectories in a site, wherein each of the planned trajectories include a traffic-constrained area subject to a vehicle occupancy constraint, the method comprising:

- generating a binary string for a plurality of traffic scenarios in the site, wherein each of the plurality of traffic scenarios comprises a vehicle position for each vehicle travelling along their planned vehicle trajectories;
- storing each traffic scenario that represents a traffic deadlock state for the site in a traffic deadlock state trie. The first aspect of the disclosure may seek to provide a method for generating a dataset that is computationally efficient for determining deadlocks. A technical benefit may include that the method is flexible because binary strings are memory efficient.

In some examples, including in at least one preferred example, optionally the method comprises:

- manually generating a binary string for each traffic scenario that represents a traffic deadlock state for the site. A technical benefit may include that the method allows for the generation of binary strings by manual identification. This can for instance be used for small sites and/or for a few vehicles.

In some examples, including in at least one preferred example, optionally the method comprises:

- procedurally generating a binary string for a plurality of traffic scenarios in the site, wherein each of the plurality of traffic scenarios comprises a vehicle position for each vehicle travelling along their planned vehicle trajectories. A technical benefit may include that it is possible to automatically generate binary strings for a large number of traffic scenarios. This can be used for large sites with many vehicles.

In some examples, including in at least one preferred example, optionally in the binary string, a position with a bit i equal to one indicates a vehicle position in node i of the planned vehicle trajectories. A technical benefit may include that it is easy to match a position of a vehicle at a site with a position in a binary string.

In some examples, including in at least one preferred example, optionally when generating a binary string for a plurality of traffic scenarios in the site, wherein each of the plurality of traffic scenarios comprises a vehicle position for each vehicle travelling along their planned vehicle trajectories does not include any traffic deadlock states, the method comprises:

- increasing the number of vehicles represented in the binary strings. A technical benefit may include that when generating binary strings for traffic scenarios and no deadlocks are encountered, it is easy to continue generating binary strings for increasingly complex traffic scenarios by increasing the number of vehicles in the binary strings. Increasing the number of vehicles will lead to completely new traffic scenarios that can be evaluated for deadlocks. This can also be used when all the deadlocks for a specific number of vehicles have been identified.

In some examples, including in at least one preferred example, optionally the vehicles are placed randomly or pseudo randomly on different initial nodes. A technical benefit may include that traffic scenarios that may otherwise have been overlooked during manual generation will be examined.

According to a second aspect of the disclosure, a computer program product comprises program code for performing, when executed by a processing circuitry, the method of the first aspect of the disclosure.

According to a third aspect of the disclosure a non-transitory computer-readable storage medium comprises instructions, which when executed by a processing circuitry, cause the processing circuitry to perform the method of the first aspect of the disclosure.

According to a fourth aspect of the disclosure, a computer-implemented method of detecting a traffic deadlock for a plurality of vehicles travelling along their planned vehicle trajectories in a site, wherein each of the planned trajectories include a traffic-constrained area subject to a vehicle occupancy constraint, the method comprising:

- searching in a traffic deadlock dataset for a binary string representing a current traffic scenario to determine if the current traffic scenario represents a traffic deadlock state; and
- outputting the deadlock classification for the current traffic scenario,
- based on the output deadlock classification for the current traffic scenario, detecting if a traffic deadlock state is present. The first aspect of the disclosure may seek to provide a method for detecting a traffic deadlock state that is computationally efficient. A technical benefit may include that searching in binary strings can be made with various techniques that are computationally efficient.

In some examples, including in at least one preferred example, optionally searching in a traffic deadlock dataset for a binary string representing a current traffic scenario to determine if the current traffic scenario represents a traffic deadlock state comprises:

- searching in a traffic deadlock state trie generated by the method of the first aspect of the disclosure. A technical benefit may include that searching for traffic deadlock states in tries is very fast.

In some examples, including in at least one preferred example, optionally the method comprises:

- determining that a traffic deadlock state is present if the binary string representing a current traffic scenario is found in the traffic deadlock dataset. A technical benefit may include that it is easy and fast to find explicit traffic deadlock states.

In some examples, including in at least one preferred example, optionally if the binary string of the current traffic scenario is not found in the traffic deadlock state trie,

- searching in the traffic deadlock state trie for a superset of the binary string of the current traffic scenario, wherein the superset of the binary string of the current traffic scenario represents a traffic deadlock state. A technical benefit may include that even if an explicit traffic deadlock states in the trie does not exist, a superset of the desired binary string may be included in the trie that represents a traffic deadlock state. In this way, the binary string that was not found can still be considered a traffic deadlock state.

In some examples, including in at least one preferred example, optionally the method further comprises:

- responsive to the output deadlock classification indicating that the vehicles are in a deadlock situation at their current positions, generating a deadlock alert. A technical benefit may include that the method will provide an alert that one or more specific binary strings, and thereby traffic scenarios, represents a traffic deadlock state. When designing a site or providing instructions to vehicles within a site, this is important information that can lead to that difficult deadlock states arises.

According to a fifth aspect of the disclosure a computer program product comprises program code for performing, when executed by a processing circuitry, the method of the first aspect of the disclosure.

According to a sixth aspect of the disclosure a non-transitory computer-readable storage medium comprises instructions, which when executed by a processing circuitry, cause the processing circuitry to perform the method of the first aspect of the disclosure.

According to a seventh aspect of the disclosure, a computer-implemented traffic planner for planning a plurality of guided vehicle trajectories within a site where a traffic situation has at least one traffic constrained location, comprises:

- a deadlock classification model configured to classify a traffic situation for vehicle traffic following guided vehicle trajectories within the site, wherein the deadlock classification model comprises a deadlock classification for a current traffic scenario, wherein the dead lock classification is generated by the method of the fourth aspect. The seventh aspect of the disclosure may seek to provide a traffic planner that in a computationally efficient when planning the vehicle trajectories of a site. A technical benefit may include that the traffic planner very fast can identify if deadlock would occur for a current traffic scenario.

In some examples, including in at least one preferred example, optionally the traffic-constrained area within the site through which the plurality of guided vehicle trajectories pass, comprises a one-way section along which at least two vehicle trajectories pass in different directions. A technical benefit may include that the traffic planner can provide planned trajectories through traffic-constrained areas that would otherwise risk being a bottleneck for the traffic at the site.

In some examples, including in at least one preferred example, optionally the vehicles are autonomous or manually operated heavy-duty vehicles following predetermined guided vehicle trajectories in the site.

In some examples, including in at least one preferred example, optionally the vehicles are autonomous or manually operated heavy-duty vehicles following predetermined guided vehicle trajectories in the site.

In some examples, including in at least one preferred example, optionally the site is a construction site, a mine, a warehouse, an airport or a mass transit station.

According to an eighth aspect of the disclosure, a computer-implemented method of detecting a traffic deadlock for a plurality of vehicles travelling along their planned vehicle trajectories in a site, wherein each of the planned trajectories include a traffic-constrained area subject to a vehicle occupancy constraint, comprises:

- generating a two-dimensional array/matrix representation of a plurality of traffic scenarios in the site, wherein each of the plurality of traffic scenarios comprises a vehicle position for each vehicle travelling along their planned vehicle trajectories, wherein each traffic scenario represents a traffic deadlock for the site;
- determining a one-dimensional array/vector representation of a current traffic scenario comprising a vehicle position for each vehicle travelling along their planned vehicle trajectory; and
- multiplying the two-dimensional array by the one-dimensional array to generate a deadlock classification one-dimensional array representing a deadlock classification for the current traffic scenario; and
- outputting the deadlock classification for the current traffic scenario. The first aspect of the disclosure may seek to provide a method that is both computationally efficient and that can be defined from human intuition. A technical benefit may include that the method is computationally efficient because matrix operations are very fast.

In some examples, including in at least one preferred example, optionally each non-zero array element of the one-dimensional array/vector representation of a current traffic scenario represents a vehicle occupied node or represents a set of vehicle occupied nodes that share the same occupancy constraint. A technical benefit may include that it is easy to provide an array/vector representation of a traffic scenario for matrix calculations.

In some examples, including in at least one preferred example, optionally when at least one element of the deadlock classification one-dimensional array/vector is one, the vehicles are in deadlock. A technical benefit may include that it is easy to identify traffic scenarios that correspond to a deadlock situation.

In some examples, including in at least one preferred example, optionally the method further comprises:

- responsive to the output deadlock classification indicating that the vehicles are in a deadlock situation at their current positions, generating a deadlock alert. A technical benefit may include that the method will automatically provide an alert so that the deadlock can be identified and prevented.

According to a ninth aspect of the disclosure, a computer-implemented traffic planner for planning a plurality of guided vehicle trajectories within a site where a traffic situation has at least one traffic constrained location, comprises:

- a deadlock classification model configured to classify a traffic situation for vehicle traffic following guided vehicle trajectories within the site, wherein the deadlock classification model comprises a deadlock classification for a current traffic scenario, wherein the dead lock classification is generated by the method of the eighth aspect. The ninth aspect of the disclosure may seek to provide a traffic planner that in a computationally efficient when planning the vehicle trajectories of a site. A technical benefit may include that the traffic planner very fast can identify if deadlock would occur for a current traffic scenario.

In some examples, including in at least one preferred example, optionally the traffic-constrained area within the site through which the plurality of guided vehicle trajectories pass, comprises a one-way section along which at least two vehicle trajectories pass in different directions. A technical benefit may include that the traffic planner can provide planned trajectories through traffic-constrained areas that would otherwise risk being a bottleneck for the traffic at the site.
In some examples, including in at least one preferred example, optionally the vehicles are autonomous or manually operated heavy-duty vehicles following predetermined guided vehicle trajectories in the site.
In some examples, including in at least one preferred example, optionally the vehicles are autonomous or manually operated heavy-duty vehicles following predetermined guided vehicle trajectories in the site.
In some examples, including in at least one preferred example, optionally the site is a construction site, a mine, a warehouse, an airport or a mass transit station.
According to a tenth aspect of the disclosure, a computer program product comprises program code for performing, when executed by a processing circuitry, the method of the eighth aspect of the disclosure.
According to an eleventh aspect of the disclosure a non-transitory computer-readable storage medium comprises instructions, which when executed by a processing circuitry, cause the processing circuitry to perform the method of the eighth aspect of the disclosure.
The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.
There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 is an exemplary design of a site where vehicles within the site are in a deadlock state.
FIG. 2 is an exemplary design of a site where vehicles within the site are not in a deadlock state.
FIG. 3 shows an example of a traffic deadlock data set used in some aspects of the disclosure.
FIG. 4 shows the method according to the first aspect of the disclosure.
FIG. 5 shows the method according to the fourth aspect of the disclosure.
FIG. 6 shows an example of an apparatus including computer program code configured when executed to cause the apparatus to implement an embodiment of the method shown schematically in **FIG. 5.**
FIG. 7 shows the method according to the eighth aspect of the disclosure.
FIG. 8 shows an example of an apparatus including computer program code configured when executed to cause the apparatus to implement an embodiment of the method shown schematically in **FIG. 7.**
FIG. 9 is a schematic diagram of an exemplary computer system **900** for implementing examples disclosed herein.

## DETAILED DESCRIPTION

The detailed description set forth below provides information and examples of the disclosed technology with sufficient detail to enable those skilled in the art to practice the disclosure.

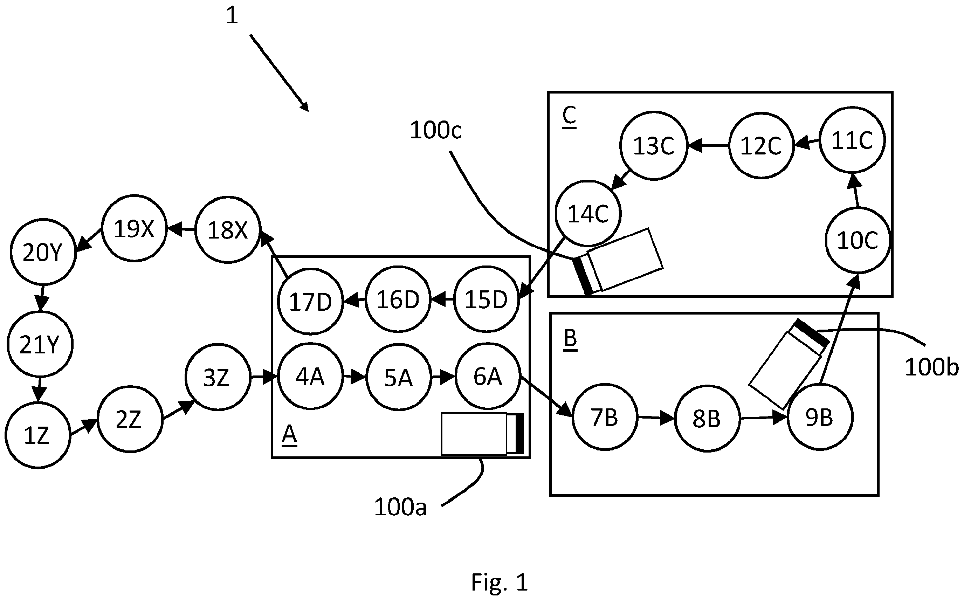

**FIG. 1** is an exemplary design of a site **1** where vehicles within the site **1** are in a deadlock state. A traffic deadlock is a traffic "impasse" situation that may occur along or at the destination or start of a vehicle trajectory in a traffic-constrained area. A traffic-constrained area is an area where node occupancy is restricted. The occupancy restriction may be for a number of nodes that are on the same vehicle trajectory or for nodes on different vehicle trajectories.

A fleet of vehicles **100a, 100b, 100c** follow their planned trajectories around the site. The site **1** comprises a plurality of zones **A, B, C** in which a plurality of nodes **1Z - 21Y** make up a cyclical planned vehicle trajectory. The nodes are intended to be travelled by the vehicles in numerical order, i.e. a vehicle starting at node **1Z** will only move to node **2Z** and so on.

The site **1** comprises a traffic-constrained area **A** with a single lane one-way traffic only comprising nodes **4A, 5A, 6A** for one direction of travel and **15D, 16D, 17D** for the other direction of travel. In area A, vehicles can travel in both directions, but only one direction can be used at any one time. Thus, for deadlock analysis purposes, if one of the nodes **4A, 5A, 6A, 15D, 16D** or **17D** are occupied, all of the other nodes are also considered to be occupied. Further, the site **1** comprises a first area **B** comprising nodes **7B-9B** and a second area **C** comprising the nodes **10C-14C**. Similarly, if one node in areas **Band C are** occupied, all nodes in that area are considered occupied. This can for instance be to maintain a minimum safe distance between vehicles or to ensure that enough time is given to a vehicle in an area to complete a task and move on before the next vehicle enters the area.

In **FIG. 1,** a deadlock situation example for three vehicles **100a-100c** is shown. None of the three vehicles **100a-100c** can move because they are each blocking each other. They are all requesting to move to a node of an area occupied by another vehicle. For example, vehicle **100a** is in node **6A** of the traffic-constrained area **A** but it needs to move to node **7B** of area **B** to continue on its trajectory. Area **B** is occupied due to that vehicle **100b** is located in node **9B**. Vehicle **100b** needs to move to area **C to** continue on its trajectory but this area is occupied by vehicle **100c** which is in node **14C**. Vehicle **100c** needs to move to node **15D** of the traffic-constrained area **A** which is occupied due to vehicle **100a** being in node **6A** of the traffic-constrained area **A**. If any of the three vehicles **100a-100c** would not have been present, there would not have been a deadlock situation.

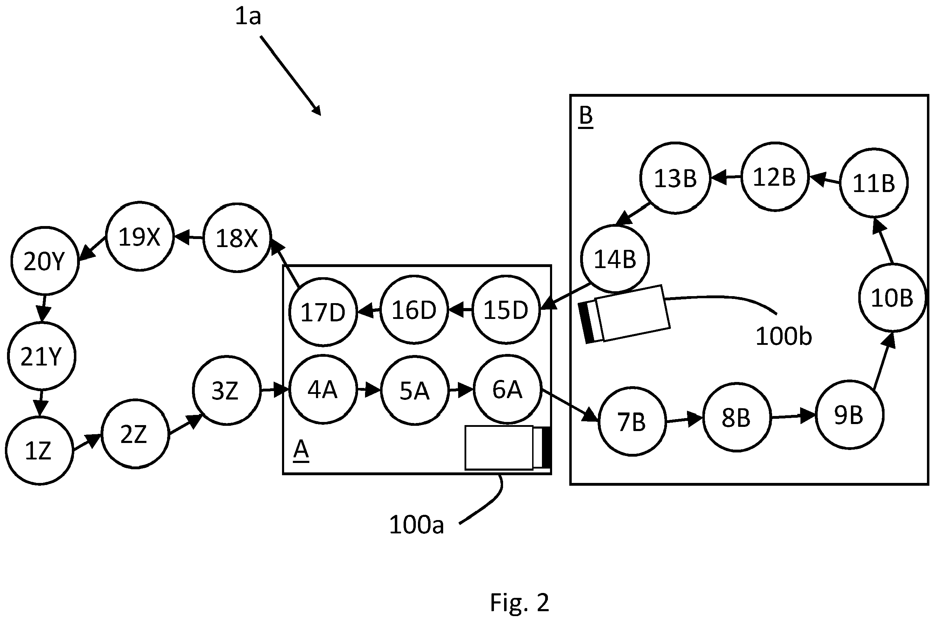

**FIG. 2** is an exemplary design of a different site **1a** where two vehicles **100a, 100b** within the site **1a** are in a deadlock state. The site **1a** comprises a plurality of zones **A, B** in which a plurality of nodes **1Z - 21Y** make up a planned vehicle trajectory. The nodes are intended to be travelled by the vehicles in numerical order, i.e. a vehicle starting at node **1Z** will only move to node **2Z** and so on. The site **1a** comprises a traffic-constrained area **A** with one-way traffic only comprising nodes **4A, 5A, 6A** for one direction of travel and **15D, 16D, 17D** for the other direction of travel. For deadlock analysis purposes, if one of the nodes **4A, 5A, 6A, 15D, 16D or 17D** are occupied, all of the other nodes are also considered to be occupied. Further, the site comprises a first area **B** comprising nodes **7B-14B**. If one node in area B is occupied, all nodes in that area are considered occupied. In this example, vehicle **100a** is in node **6A** of the traffic-constrained area **A** but it needs to move to node **7B** of area **B** to continue on its trajectory. Area **B** is occupied due to that vehicle **100b** is located in node **14B**. Vehicle **100b** needs to move to node **15D** of the traffic-constrained area **A** which is occupied due to vehicle **100a** being in node **6A** of the traffic-constrained area **A**. It is thus necessary to be able to determine deadlock situations in many types of sites with different number of vehicles.

If the vehicle speeds are assumed to be constant along each vehicle trajectory, then the nodes will be located along each vehicle trajectory at equal time intervals or periods of time. If, however, a planned vehicle trajectory requires a vehicle to move more slowly along its trajectory within the site than other vehicles move along their trajectories, its nodes will be spaced closer together than the nodes along the other trajectories. Similarly, if a planned vehicle trajectory requires a vehicle to move more quickly along its trajectory path, then the nodes along that trajectory path will be spaced further apart as the vehicle will have moved more along its trajectory in that time period.

At a site where a number of vehicles will be guided autonomously or semi-autonomously along one or more planned trajectories, each vehicle's trajectory, meaning its direction along a path and speed of travel along that path, is ideally planned in advance using a traffic planner. The traffic planner, in other words, configures the site traffic in advance of any vehicles being deployed and guided along vehicle trajectories in a way that avoids any problems such as vehicle jams, unnecessary delays or deadlocks, where the trajectories planned result in a plurality of vehicles being unable to move because of the location they are in having certain traffic constraints on vehicle occupancy limits in that location. In the sites **1** and **1a,** this location is the traffic-constrained area **A.**

Other examples of traffic-constrained areas include contraflow-type situations or any similar location along a trajectory where there is a narrowing in the road surface along a vehicle trajectory where vehicles have to pass each other in single file. A traffic-constrained area may also be created by a task that a vehicle has to perform at a particular location along its trajectory. For example, lack of access to an available loading bay or a refuelling point along a trajectory may also create a deadlock situation, if a vehicle occupying such a location cannot vacate the location because another vehicle is occupying the next available location along its trajectory.

A deadlock situation may occur when two or more nodes in a traffic-constrained area enter a cyclic state of occupancy such that a first node within the traffic-constrained location cannot be vacated until another node in the traffic-constrained location has been vacated, where the other node in the traffic-constrained location cannot be vacated until the first node has been vacated. A deadlock can accordingly occur where multiple vehicles are all following the same trajectory path but are occupying different nodes along that trajectory path or amongst multiple vehicles each following different trajectories/trajectory paths that enter a traffic-constrained area from different directions.

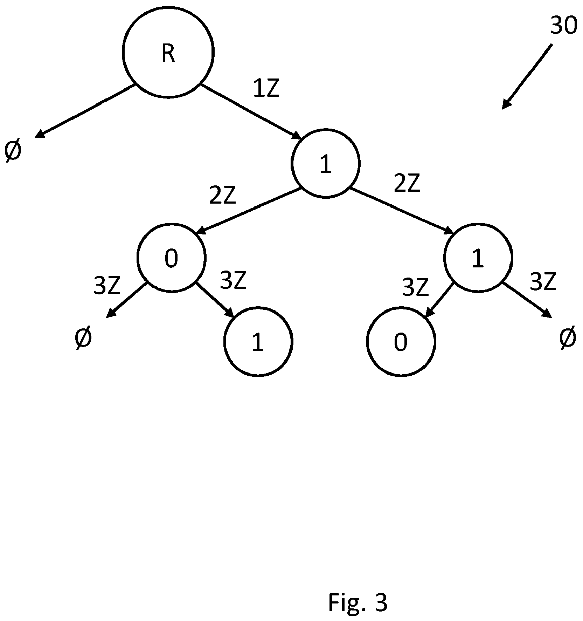

FIG. 3 shows an example of a traffic deadlock dataset used in some aspects of the disclosure. In the example of FIG. 3, the traffic deadlock dataset is a trie 30 with root node R from which branches grow. In the example, the trie 30 corresponds to a road network graph with nodes 1Z, 2Z and 3Z, and edges (1Z, 2Z), (2Z, 3Z) and (3Z, 1Z). The index of each edge is assigned to be 0, 1 and 2 respectively. If the site only has one vehicle, which is moving from 2Z to 3Z, then bit 1 is set to 1, resulting in a site state of 010.

Starting at the root R of the trie 30, each node contains two possible leaves, themselves being tries. The leaves represent if any deadlock has a 0 or a 1 at that bit position, starting at position 0, then 1, then 2 and so on. When inserting a site state, if the current bit is 0, you go to the left leaf, if the bit is 1, you go to the right leaf. Each bit you pass, means going one level deeper in the tree.

If the leaf is empty, you insert a new leaf and keep going until all bits have been inserted. The operation of inserting leaves in the trie is performed using known methods.

When checking if a specific traffic scenario is a deadlock state, one traverses the tree using the binary number of the site state. Just like when a binary state is inserted, the leaf to explore is based on the binary values of each sequential bit. In order to achieve the desired result of the trie in this example is that if bit i is 0, then we go left in the trie, but if bit i is 1, we explore both left and right. This is because there may exist a deadlock state which does not require a 1 at bit i, but which matches correctly for other bits. The method thus allows for searching for inexact matches by checking if the current traffic scenario is a super set of any deadlock in the trie. When the search reaches an end node, a matching deadlock state in the trie has been found.

In the example of FIG. 3, the site states 110 and 101 has been inserted into the trie 30. If one wants to look up if traffic scenario corresponding to the binary string 011, then the trie is traversed by taking the steps left, right, right, but since there is no trie when going left from root R as indicated by the null symbol ∅, the given state 011 does not exist in the trie 30 and is therefore not in the list of deadlock states.

On the other hand, if state 111 is searched for in the trie 30, one traverses the trie 30 by taking steps right, right, right. In this case, we also encounter an empty trie at the last bit. However, since the bit is 1, the trie 30 is explored both left and right leading to finding an end node at state 110. State 111 is therefore a super set of a deadlock state 110 which exists in the trie 30, and is therefore itself a deadlock. State 111 does therefore not need to be added to trie 30 as the superset is present in the trie 30.

When checking if a deadlock state exists in the trie 30, some operations can be parallelized. When encountering the value 1, the computations of exploring both leaves are separate. Using parallelization of computations could therefore improve the lookup speed.

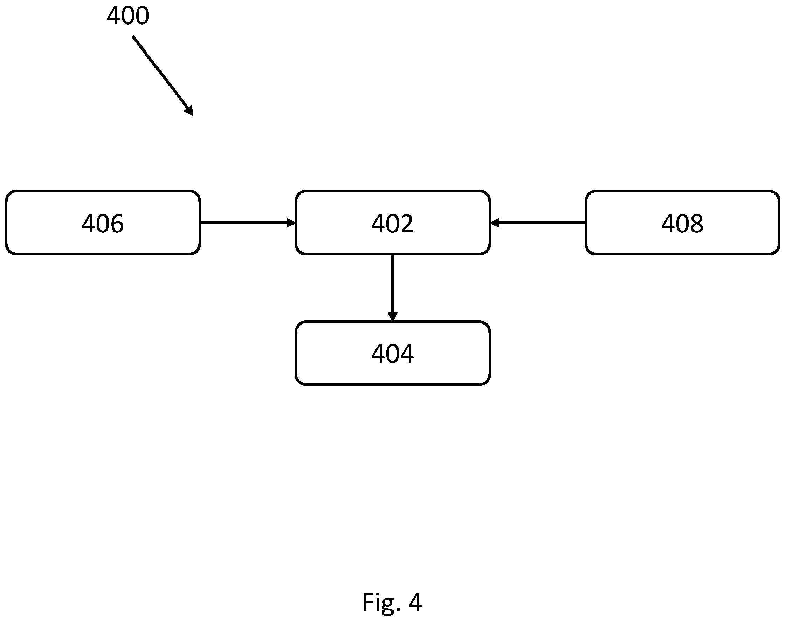

FIG. 4 is a flowchart of an exemplary method 400 of generating a traffic deadlock dataset for a plurality of vehicles travelling along their planned vehicle trajectories in a site, wherein each of the planned trajectories include a traffic-constrained area subject to a vehicle occupancy constraint. The method 400 may comprise the following actions, steps or operations.

Action 402. Binary strings for a plurality of traffic scenarios in the site are generated, wherein each of the plurality of traffic scenarios comprises a vehicle position for each vehicle travelling along their planned vehicle trajectories. Action 404. Each traffic scenario that represents a traffic deadlock state for the site is stored in a traffic deadlock state trie.

The method may contain one or both of the following input steps to generate the binary strings. Action 406. Manually generating a binary string for each traffic scenario that represents a traffic deadlock state for the site. Action 408. Procedurally generating a binary string for a plurality of traffic scenarios in the site, wherein each of the plurality of traffic scenarios comprises a vehicle position for each vehicle travelling along their planned vehicle trajectories.

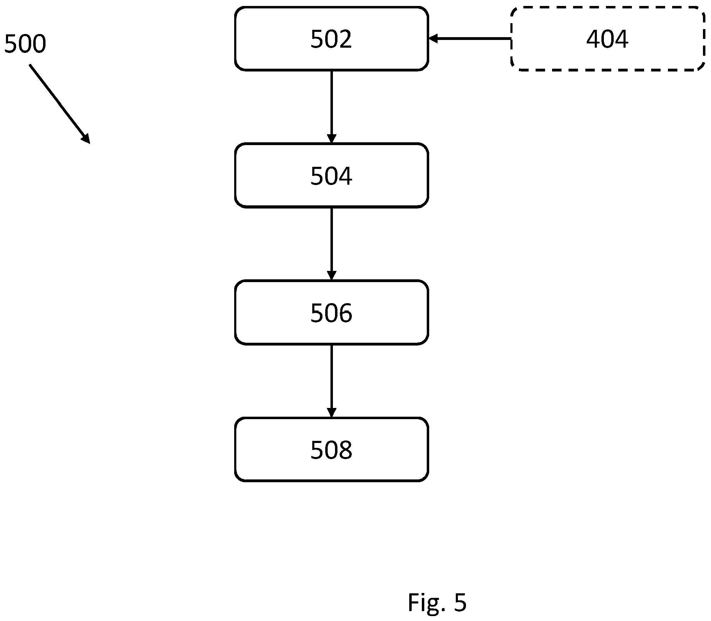

FIG. 5 is a flowchart of an exemplary method 500 of detecting a traffic deadlock for a plurality of vehicles travelling along their planned vehicle trajectories in a site, wherein each of the planned trajectories include a traffic-constrained area subject to a vehicle occupancy constraint. The method 500 may comprise the following actions, steps or operations.

Action 502. A traffic deadlock dataset is searched for a binary string representing a current traffic scenario to determine if the current traffic scenario represents a traffic deadlock state. In the example, the stored traffic deadlock dataset is input from Action 404 of the method 400. Action 504. The deadlock classification for the current traffic scenario is output. Action 506. Based on the output deadlock classification for the current traffic scenario, detecting if a traffic deadlock state is present. Action 508. Responsive to the output deadlock classification indicating that the vehicles are in a deadlock situation at their current positions, generating a deadlock alert.

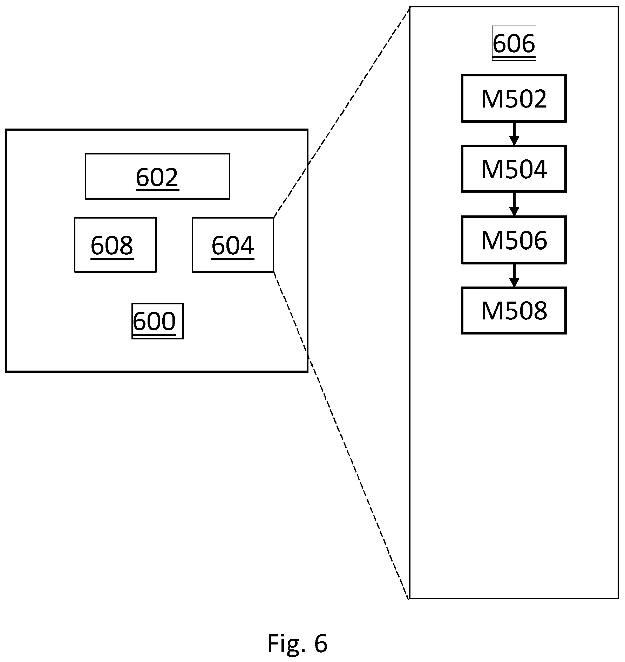

FIG. 6 shows an example of a traffic planner 600 including computer program code configured when executed to cause the traffic planner to implement the method shown schematically in FIG. 5. The traffic planner 600 can be installed on a server locally or on a cloud server. The traffic planner 600 comprises a memory 604, computer code 606 and one or more processor(s) or processing circuitry 608. The computer code, when loaded from memory 604 and executed by the one or more processors or processing circuitry **608,** causes the traffic planner **600** to perform the actions, steps or operations of the methods described above.

One or more data communication component(s) **602** may be provided for the traffic planner to enable communications with one or more remote entities. For example, in some embodiments a suitable receiver/transmitter/antenna arrangement is provided to communicate planned vehicle trajectories with one or more vehicles **100a-100c** which form a planned fleet of vehicles intended to operate at a particular site or which are operating at a particular site to update the vehicles' planned vehicle trajectories at the site or defined region. The one or more data communication component(s) **602** may also be used to provide an alert when a deadlock has been identified by the method **500.**

The memory **602** stores computer program code **606** which, when loaded from the memory and executed by the one or more processor(s) or processing circuitry configures the traffic planner **600** to perform the disclosed method **500** for example. For example, in the embodiment of the computer program code shown in **FIG. 6,** the computer program code **606** comprises a set of computer code modules **M502-M508,** which correspond to steps **S502** to **S508** shown in **FIG. 5.**

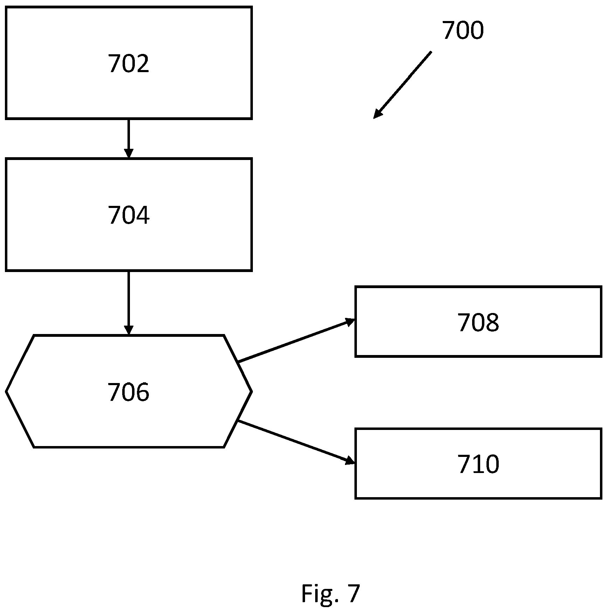

**FIG. 7** is a flowchart of an exemplary method **700** of assessing vehicle trajectories for deadlock scenarios in a site where multiple vehicles operate by following planned vehicle trajectories. The method **700** may comprise the following actions, steps or operations.

A prerequisite for the method is the use of a two-dimensional array/matrix representation of a plurality of traffic scenarios in the site. Each of the plurality of traffic scenarios comprises a vehicle position for each vehicle travelling along their planned vehicle trajectories. Each traffic scenario represents a traffic deadlock for the site. This matrix $M_D$ represents a deadlock memory. Every row in $M_D$ represents a deadlock state, i.e. vehicles are placed in nodes in such a way that a dead lock is present. Such examples can be seen in **FIGS. 1** and **2** above. A row in the matrix $M_D$ is a binary string, where an element is one or zero depending on if a corresponding node is occupied. For the example site in **FIGS. 1** and **2**, a row in $M_D$ has 21 elements, each element representing nodes **1Z-21Y.**

Each row of $M_D$ will take on the format of [$node\_1$, $node\_2$, ..., $node\_21$] with each element divided by the number of occupied nodes, i.e. the number of vehicles intended to operate within the site. This is done in order to obtain elements with the value 1 in a deadlock classification one-dimensional array $y$ during the calculation.

**Action 702.** A one-dimensional array/vector $v_0$ representation of a current traffic scenario comprising a vehicle position for each vehicle travelling along their planned vehicle trajectory is defined. The vector $v_0$ is equal in size to a row in $M_D$. Every element in $v_0$ represents a node 1Z-21Y of the site according to the above example, with any element having the value 1 if a vehicle occupies that node. Thus, $v_0$ = [$node\_1$, $node\_2$, ..., $node\_21$]. **Action 704.** The two-dimensional matrix $M_D$ is multiplied by the one-dimensional array/vector $v_0$ to generate a deadlock classification one-dimensional array $y$ representing a deadlock classification for the current traffic scenario, i.e. $M_D \cdot v_0 = y$. **Action 706.** The deadlock classification one-dimensional array $y$ is checked to see if any element in $y$ is equal to one. **Action 708.** If any element in $y$ is equal to one, the deadlock classification for the current traffic scenario is output as true. **Action 710.** If no element in $y$ is equal to one, the deadlock classification for the current traffic scenario is output as false.

As an example, a small portion of matrix $M_D$ will be shown representing three known deadlock states.

$$M_D = \begin{bmatrix} 0 & 0 & 0 & 0 & 0 & 1 & 0 & 0 & 1 & 0 & 0 & 0 & 0 & 1 & 0 & 0 & 0 & 0 & 0 & 0 & 0 \\ 0 & 0 & 0 & 0 & 1 & 0 & 0 & 0 & 1 & 0 & 0 & 0 & 0 & 1 & 0 & 0 & 0 & 0 & 0 & 0 & 0 \\ 0 & 0 & 0 & 0 & 0 & 1 & 0 & 1 & 0 & 0 & 0 & 0 & 0 & 1 & 0 & 0 & 0 & 0 & 0 & 0 & 0 \end{bmatrix} \cdot 1/3$$

where the elements are multiplied with the value 1/3 due to that three vehicles are present in the site.

For a number of examples of $v_0$, the following table shows the outcome of the multiplication of $M_D$ and $y$ in order to determine if a specific set of vehicle positions is a deadlock or not. For each case $v_0$ is simplified in the table. For instance state [6, 9, 14] corresponds to

$$v_0 = \begin{bmatrix} 0 & 0 & 0 & 0 & 0 & 1 & 0 & 0 & 1 & 0 & 0 & 0 & 0 & 1 & 0 & 0 & 0 & 0 & 0 & 0 & 0 \end{bmatrix}.$$

The multiplication $M_D \cdot v_0$ will thus provide a deadlock classification one-dimensional array $y$ representing a deadlock classification for the current traffic scenario as $y$ = [1 2/3 2/3]. This is seen as case A in the table.

Table 1. Example cases of deadlock classifications.

| Case | State (occupied nodes) | $y$ | Deadlock (true/false) | Comment |
|------|------------------------|-----|------------------------|---------|
| A | [6,9,14] | [1, 2/3, 2/3] | true | Matches top row in $M_D$ above as indicated by the 1 in the first position of $y$. Thus, this state is a deadlock. |
| B | [1,9,14] | [2/3, 2/3, 1/3] | false | Only partial matches of vehicle positions on each row in $M_D$. No vehicle is in area A, so this state is not a deadlock. |
| C | [9,14] | [2/3, 2/3, 1/3] | false | Only two vehicles, with no vehicles blocking each other. This is not a deadlock. |
| D | [4,9,14] | [2/3, 2/3, 1/3] | false | This is in reality a deadlock case, but it is incorrectly classified as not being a deadlock because this deadlock situation is not expressed in $M_D$. |

Case D shows the importance of correctly defining the deadlock memory $M_D$ with each deadlock case. Case D is an incorrectly classified as not being a deadlock state due to that the memory $M_D$ does not contain that specific deadlock state.

Another example can be shown for the site **1a** of **FIG. 2.** In this example, a small portion of matrix $M_D$ can be written as $M_D =$

$$\begin{bmatrix} 0 & 0 & 0 & 0 & 0 & 1 & 0 & 0 & 0 & 0 & 0 & 0 & 0 & 1 & 0 & 0 & 0 & 0 & 0 & 0 & 0 \\ 0 & 0 & 0 & 0 & 1 & 0 & 0 & 0 & 0 & 0 & 0 & 0 & 0 & 1 & 0 & 0 & 0 & 0 & 0 & 0 & 0 \\ 0 & 0 & 0 & 0 & 0 & 1 & 0 & 0 & 0 & 0 & 0 & 0 & 1 & 0 & 0 & 0 & 0 & 0 & 0 & 0 & 0 \end{bmatrix} \cdot 1/2$$

where the elements are multiplied with the value 1/2 due to that two vehicles are present in the site 1a.

Any one-dimensional array/vector $v_0$ representation of a current traffic scenario comprising elements corresponding to vehicle positions of nodes 6A and 14B, 5A and 14B and 6A and 13B respectively would result in a deadlock.

The matrix $M_D$ for a site with N number of nodes and K number of vehicles will have

$$M_D = \begin{bmatrix} Node\ 1 & Node\ 2 & Node\ 3 & \cdots & Node\ N \\ \vdots & \vdots & \vdots & \vdots & \vdots \\ Node\ 1 & Node\ 2 & Node\ 3 & \cdots & Node\ N \end{bmatrix} \cdot 1/K$$

, where the number of rows corresponds to the number of known deadlock states. If the number of vehicles increases or decreases, the number of deadlock states, i.e. the number of rows of $M_D$, will also increase or decrease.

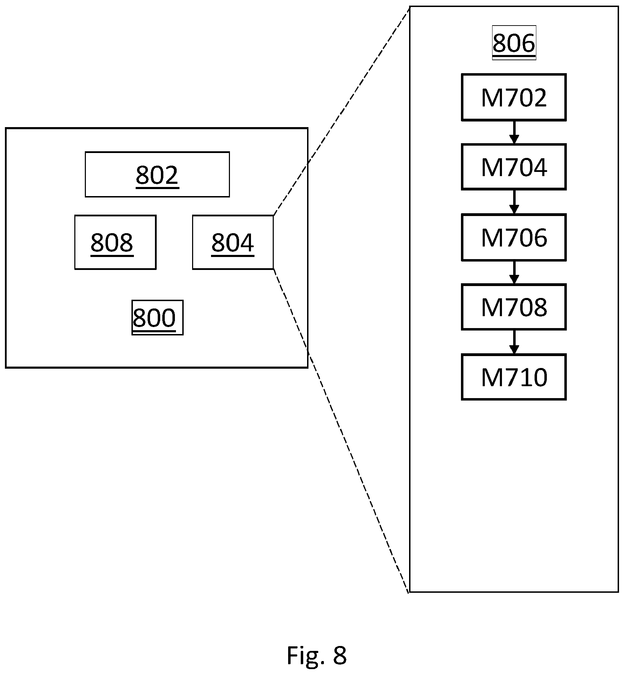

**FIG. 8** shows an example of a traffic planner **800** including computer program code configured when executed to cause the traffic planner to implement the method shown schematically in **FIG. 3.** The traffic planner **800** can be installed on a server locally or on a cloud server. The traffic planner **800** comprises a memory **804,** computer code **806** and one or more processor(s) or processing circuitry **808.** The computer code, when loaded from memory **804** and executed by the one or more processors or processing circuitry **808,** causes the traffic planner **800** to perform the actions, steps or operations of the methods described above.

One or more data communication component(s) **802** may be provided for the traffic planner to enable communications with one or more remote entities. For example, in some embodiments a suitable receiver/transmitter/antenna arrangement is provided to communicate planned vehicle trajectories with one or more vehicles **100a-100c** which form a planned fleet of vehicles intended to operate at a particular site or which are operating at a particular site to update the vehicles' planned vehicle trajectories at the site or defined region. The one or more data communication component(s) **802** may also be used to provide an alert when a deadlock has been identified by the method **700.**

The memory **802** stores computer program code **806** which, when loaded from the memory and executed by the one or more processor(s) or processing circuitry configures the traffic planner **800** to perform the disclosed method **700** for example. For example, in the embodiment of the computer program code shown in **FIG. 8,** the computer program code **806** comprises a set of computer code modules **M702-M710,** which correspond to steps **S702** to **S710** shown in **FIG. 7.**

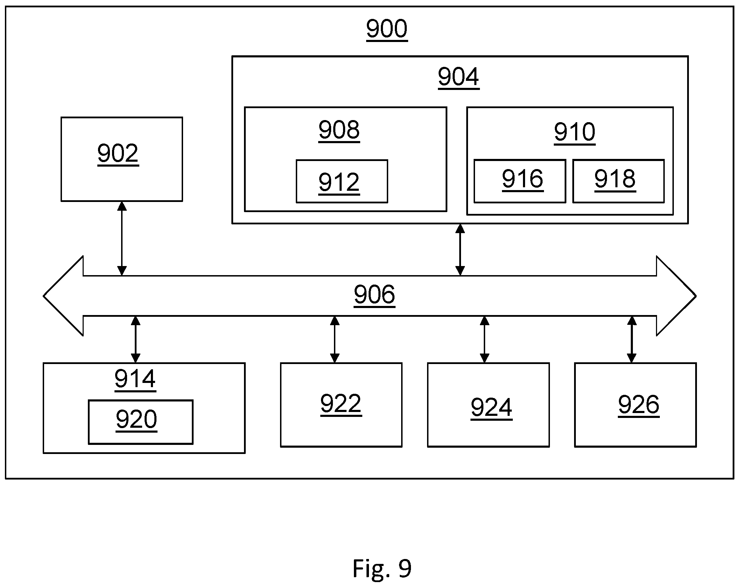

**FIG. 9** is a schematic diagram of a computer system **900** for implementing examples disclosed herein. The computer system **900** is adapted to execute instructions from a computer-readable medium to perform these and/or any of the functions or processing described herein. The computer system **900** may be connected (e.g., networked) to other machines in a LAN, an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include processing circuitry **902** (e.g., processing circuitry including one or more processor devices or control units), a memory **904,** and a system bus **906.** The computer system **900** may include at least one computing device having the processing circuitry **902.** The system bus **906** provides an interface for system components including, but not limited to, the memory **904** and the processing circuitry **902.** The processing circuitry **902** may include any number of hardware components for conducting data or signal processing or for executing computer code stored in memory **904.** The processing circuitry **902** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **902** may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processing circuitry **902** (e.g., via a circuit or any other wired, wireless, or network connection) and may include computer code for executing one or more processes described herein. The memory **904** may include non-volatile memory **908** (e.g., read-only memory (ROM), erasable programmable read-only memory (EPROM), electrically erasable programmable read-only memory (EEPROM), etc.), and volatile memory **910** (e.g., random-access memory (RAM)), or any other medium which can be used to carry or store desired program code in the form of machine-executable instructions or data structures and which can be accessed by a computer or other machine with processing circuitry **902.** A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **914** and other drives associated with computer-readable media and computer-usable media may provide non-volatile storage of data, data structures, computer-executable instructions, and the like.

Computer-code that is hard or soft coded may be provided in the form of one or more modules. The module(s) can be implemented as software and/or hard-coded in circuitry to implement the functionality described herein in whole or in part. The modules may be stored in the storage device **914** and/or in the volatile memory **910,** which may include an operating system **916** and/or one or more program modules **918.** All or a portion of the examples disclosed herein may be implemented as a computer program **920** stored on a transitory or non-transitory computer-usable or computer-readable storage medium (e.g., single medium or multiple media), such as the storage device **914,** which includes complex programming instructions (e.g., complex computer-readable program code) to cause the processing circuitry **902** to carry out actions described herein. Thus, the computer-readable program code of the computer program **920** can comprise software instructions for implementing the functionality of the examples described herein when executed by the processing circuitry **902.** In some examples, the storage device **914** may be a computer program product (e.g., readable storage medium) storing the computer program **920** thereon, where at least a portion of a computer program **920** may be loadable (e.g., into a processor) for implementing the functionality of the examples described herein when executed by the processing circuitry **902.** The processing circuitry **902** may serve as a controller or control system for the computer system **900** that is to implement the functionality described herein.

The computer system **900** may include an input device interface **922** configured to receive input and selections to be communicated to the computer system **900** when executing instructions, such as from a keyboard, mouse, touch-sensitive surface, etc. Such input devices may be connected to the processing circuitry **902** through the input device interface **922** coupled to the system bus **906** but can be connected through other interfaces, such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g., a liquid crystal display (LCD) or a cathode ray tube (CRT)). The computer system **900** may include a communications interface **926** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer-implemented method of detecting a traffic deadlock for a plurality of vehicles travelling along their planned vehicle trajectories in a site, wherein each of the planned trajectories include a traffic-constrained area subject to a vehicle occupancy constraint, the method comprising:

- generating a two-dimensional array/matrix representation of a plurality of traffic scenarios in the site, wherein each of the plurality of traffic scenarios comprises a vehicle position for each vehicle travelling along their planned vehicle trajectories, wherein each traffic scenario represents a traffic deadlock for the site;
- determining a one-dimensional array/vector representation of a current traffic scenario comprising a vehicle position for each vehicle travelling along their planned vehicle trajectory; and
- multiplying the two-dimensional array by the one-dimensional array to generate a deadlock classification one-dimensional array representing a deadlock classification for the current traffic scenario; and
- outputting the deadlock classification for the current traffic scenario.

Example 2: A computer-implemented method according to example 1, wherein each non-zero array element of the one-dimensional array/vector representation of a current traffic scenario represents a vehicle occupied node or represents a set of vehicle occupied nodes which share the same occupancy constraint.

Example 3: A computer-implemented method according to any one of examples 1 or 2, wherein when at least one element of the deadlock classification one-dimensional array/vector is one, the vehicles are in deadlock.

Example 4: A computer-implemented method according to any one of the preceding examples, wherein the method further comprises:

- responsive to the output deadlock classification indicating that the vehicles are in a deadlock situation at their current positions, generating a deadlock alert.

Example 5: A computer-implemented traffic planner for planning a plurality of guided vehicle trajectories within a site where a traffic situation has at least one traffic constrained location, the traffic planner comprising:

- a deadlock classification model configured to classify a traffic situation for vehicle traffic following guided vehicle trajectories within the site, wherein the deadlock classification model comprises a deadlock classification for a current traffic scenario, wherein the dead lock classification is generated by the method of any one the preceding examples.

Example 6: A computer-implemented traffic planner according to example 5, wherein the traffic constrained location within the site through which the plurality of guided vehicle trajectories pass, comprises a one-way section along which at least two vehicle trajectories pass in different directions.

Example 7: A computer-implemented traffic planner according to anyone of examples 5 or 6, wherein the vehicles are autonomous or manually operated heavy-duty vehicles following predetermined guided vehicle trajectories in the site.

Example 8: A computer-implemented traffic planner according to anyone of examples 5-7, wherein the site being a construction site, a mine, a warehouse, an airport or a mass transit station.

Example 9: A computer program product comprising program code for performing, when executed by a processing circuitry, the method of any of examples 1-4.

Example 10: A non-transitory computer-readable storage medium comprising instructions, which when executed by a processing circuitry, cause the processing circuitry to perform the method of any of examples 1-4.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer-implemented method of generating a traffic deadlock dataset for a plurality of vehicles travelling along their planned vehicle trajectories in a site, wherein each of the planned trajectories include a traffic-constrained area subject to a vehicle occupancy constraint, the method comprising:

   - generating a binary string for a plurality of traffic scenarios in the site, wherein each of the plurality of traffic scenarios comprises a vehicle position for each vehicle travelling along their planned vehicle trajectories;
   - storing each traffic scenario that represents a traffic deadlock state for the site in a traffic deadlock state trie.

2. The computer-implemented method of claim 1, wherein the method comprises:

   - manually generating a binary string for each traffic scenario that represents a traffic deadlock state for the site.

3. The computer-implemented method of claim 1, wherein the method comprises:

   - procedurally generating a binary string for a plurality of traffic scenarios in the site, wherein each of the plurality of traffic scenarios comprises a vehicle position for each vehicle travelling along their planned vehicle trajectories.

4. The computer-implemented method according to any one of claims 1-3, wherein in the binary string, a position with a bit $i$ equal to one indicates a vehicle position in node $i$ of the planned vehicle trajectories.

5. The computer-implemented method according to any one of the preceding claims, wherein when generating a binary string for a plurality of traffic scenarios in the site, wherein each of the plurality of traffic scenarios comprises a vehicle position for each vehicle travelling along their planned vehicle trajectories does not include any traffic deadlock states, the method comprises:

   - increasing the number of vehicles represented in the binary string.

**6.** A computer program product comprising program code for performing, when executed by a processing circuitry, the method of any of claims 1-5.

**7.** A non-transitory computer-readable storage medium comprising instructions, which when executed by a processing circuitry, cause the processing circuitry to perform the method of any of claims 1-5.

**8.** A computer-implemented method of detecting a traffic deadlock for a plurality of vehicles travelling along their planned vehicle trajectories in a site, wherein each of the planned trajectories include a traffic-constrained area subject to a vehicle occupancy constraint, the method comprising:

- searching in a traffic deadlock dataset for a binary string representing a current traffic scenario to determine if the current traffic scenario represents a traffic deadlock state; and
- outputting the deadlock classification for the current traffic scenario,
- based on the output deadlock classification for the current traffic scenario, detecting if a traffic deadlock state is present.

**9.** The computer-implemented method according to claim 8, wherein searching in a traffic deadlock dataset for a binary string representing a current traffic scenario to determine if the current traffic scenario represents a traffic deadlock state comprises:

- searching in a traffic deadlock state trie generated by the method of any one of claims 1-6.

**10.** The computer-implemented method according to claim 8 or 9, wherein the method comprises:

- determining that a traffic deadlock state is present if the binary string representing a current traffic scenario is found in the traffic deadlock dataset.

**11.** A computer-implemented method according to any one of claims 8-10, wherein if the binary string of the current traffic scenario is not found in the traffic deadlock state trie,

- searching in the traffic deadlock state trie for a superset of the binary string of the current traffic scenario, wherein the superset of the binary string of the current traffic scenario represents a traffic deadlock state.

**12.** A computer-implemented method according to any one of the preceding claims 8-11, wherein the method further comprises:

- responsive to the output deadlock classification indicating that the vehicles are in a deadlock situation at their current positions, generating a deadlock alert.

**13.** A computer program product comprising program code for performing, when executed by a processing circuitry, the method of any of claims 8-12.

**14.** A non-transitory computer-readable storage medium comprising instructions, which when executed by a processing circuitry, cause the processing circuitry to perform the method of any of claims 8-12.

**15.** A computer-implemented traffic planner for planning a plurality of guided vehicle trajectories within a site where a traffic situation has at least one traffic constrained location, the traffic planner comprising:

- a deadlock classification model configured to classify a traffic situation for vehicle traffic following guided vehicle trajectories within the site, wherein the deadlock classification model comprises a deadlock classification for a current traffic scenario, wherein the deadlock classification is generated by the method of any one the preceding claims 8-12.

Fig. 1

Fig. 2

Fig. 3

400

406 → 402 ← 408

402 → 404

Fig. 4

EP 4 465 141 A1

500

```
          ┌─────────────┐        ┌ ─ ─ ─ ─ ─ ─ ┐
          │     502     │ ◄───── │     404       
          └─────────────┘        └ ─ ─ ─ ─ ─ ─ ┘
                 │
                 ▼
          ┌─────────────┐
          │     504     │
          └─────────────┘
                 │
                 ▼
          ┌─────────────┐
          │     506     │
          └─────────────┘
                 │
                 ▼
          ┌─────────────┐
          │     508     │
          └─────────────┘
```

Fig. 5

Fig. 6

700

702

704

706

708

710

Fig. 7

Fig. 8

Fig. 9

Europäisches
Patentamt

European
Patent Office

Office européen
des brevets

## EUROPEAN SEARCH REPORT

Application Number

EP 23 17 3942

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Krishna Moorthy ET AL: "DEADLOCK PREDICTION AND AVOIDANCE IN AN AGV SYSTEM", , 1 June 2000 (2000-06-01), XP055060564, SINGAPORE-MIT ALLIANCE Retrieved from the Internet: URL:https://scholar.google.de/scholar?q=de adlock+prediction+and+avoidance+in+an+AGV+ system&hl=de&as_sdt=0&as_vis=1&oi=scholart [retrieved on 2013-04-22] * the whole document * ----- | 1-15 | INV. G05D1/02 G08G1/00 G08G1/0968 |
| X | SVESTKA P ET AL: "Coordinated path planning for multiple robots", ROBOTICS AND AUTONOMOUS SYSTEMS, ELSEVIER BV, AMSTERDAM, NL, vol. 23, no. 3, 2 April 1998 (1998-04-02), pages 125-152, XP004122375, ISSN: 0921-8890, DOI: 10.1016/S0921-8890(97)00033-X * page 125 - page 150 * ----- | 1-15 | |
| | | | TECHNICAL FIELDS SEARCHED (IPC) |
| | | | G05D |
| X | DRAGANJAC IVICA ET AL: "Highly-scalable traffic management of autonomous industrial transportation systems", ROBOTICS AND COMPUTER INTEGRATED MANUFACTURING, ELSEVIER SCIENCE PUBLISHERS BV., BARKING, GB, vol. 63, 13 December 2019 (2019-12-13), XP086019179, ISSN: 0736-5845, DOI: 10.1016/J.RCIM.2019.101915 [retrieved on 2019-12-13] * page 1 - page 16 * ----- | 1-15 | |

-/--

The present search report has been drawn up for all claims

| Place of search | Date of completion of the search | Examiner |
|---|---|---|
| Munich | 20 October 2023 | Burchielli, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

EUROPEAN SEARCH REPORT

Application Number

EP 23 17 3942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 002 049 A1 (RAPYUTA ROBOTICS CO LTD [JP]) 25 May 2022 (2022-05-25) * the whole document * ----- | 1-15 | |
| X | EP 4 141 599 A1 (RAPYUTA ROBOTICS CO LTD [JP]) 1 March 2023 (2023-03-01) * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Munich | 20 October 2023 | Burchielli, M |

EPO FORM 1503 03.82 (P04C01)

## ANNEX TO THE EUROPEAN SEARCH REPORT
## ON EUROPEAN PATENT APPLICATION NO.

EP 23 17 3942

This annex lists the patent family members relating to the patent documents cited in  the above-mentioned European search report.
The members are as contained in the European Patent Office EDP file on
The European Patent Office is in no way liable for these particulars which are merely given for the purpose of information.

20-10-2023

| Patent document cited in search report | | Publication date | Patent family member(s) | | Publication date |
|---|---|---|---|---|---|
| EP 4002049 | A1 | 25-05-2022 | CA | 3138062 A1 | 20-05-2022 |
| | | | CN | 114519448 A | 20-05-2022 |
| | | | EP | 4002049 A1 | 25-05-2022 |
| | | | JP | 2022082419 A | 01-06-2022 |
| | | | US | 2022163969 A1 | 26-05-2022 |
| EP 4141599 | A1 | 01-03-2023 | CA | 3148116 A1 | 28-02-2023 |
| | | | CN | 115729231 A | 03-03-2023 |
| | | | EP | 4141599 A1 | 01-03-2023 |
| | | | JP | 7272547 B2 | 12-05-2023 |
| | | | JP | 2023035767 A | 13-03-2023 |
| | | | US | 2023063370 A1 | 02-03-2023 |

EPO FORM P0459

For more details about this annex : see Official Journal of the European Patent Office, No. 12/82